Europäisches Patentamt

European Patent Office

Office européen des brevets

(11) Publication number: **0 148 038 B1**

# EUROPEAN PATENT SPECIFICATION

(45) Date of publication of patent specification: **29.01.92**  (51) Int. Cl.⁵: **C01B  33/34**, B01J 29/04

(21) Application number: **84401571.9**

(22) Date of filing: **26.07.84**

(54) **Crystalline ironborosilicates and process of preparing same.**

(30) Priority: **26.07.83 US 517396**

(43) Date of publication of application:
**10.07.85 Bulletin  85/28**

(45) Publication of the grant of the patent:
**29.01.92 Bulletin  92/05**

(84) Designated Contracting States:
**DE FR GB IT NL**

(56) References cited:
EP-A- 0 041 621        EP-A- 0 104 107
DE-A- 2 755 770        FR-A- 2 429 182
GB-A- 2 077 709        US-A- 4 269 813

Zeolite Molecular Sieves / BRECK (1979)
page 373, Molecular Sieve Catalysts /
MICHIELS & DE HERDT, page 325

(73) Proprietor: **CENTRE DE RECHERCHE IN-
DUSTRIELLE DU OUEBEC**
**333 Rue Franquet**
**Ste-Foy Ouebec, G1V 4C7(CA)**

(72) Inventor: **Kee Kwee, Lam Shang Leen**
**2206A Halifax Drive**
**Ottawa Ontario K1G 2W6(CA)**
Inventor: **Chang, Jin Rong**
**3650 rue des Compagnons Apt. 15**
**Ste-Foy Ouébec G1X 3Z1(CA)**

(74) Representative: **Cournarie, Michèle et al**
**OFFICE BLETRY R.& G. ROGER-PETIT &
R.BLETRY 2, boulevard de Strasbourg
F-75010 Paris(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

BACKGROUND OF INVENTION

(a) Field of the Invention

This invention is concerned with novel crystalline ironborosilicates and their uses in the production of high-octane liquid hydrocarbons. More particularly, it relates to novel crystalline ironborosilicate zeolitic materials possessing catalytic properties and to conversion processes using such crystalline iron-borosilicates.

(b) Description of the Prior Art

It has been demonstrated in the past that zeolitic materials, both natural and synthetic, and commonly referred to as molecular sieves, can have catalytic, sorption and separating properties. A number of existing processes such as catalytic cracking, methanol conversion, isomerisation of xylenes, alkylation of aromatics, exemplify the uses of these molecular sieve materials.

Typically represented by aluminosilicates, zeolites are structurally complex crystalline inorganic polymers based on an infinitely extending framework of $AlO_4$ and $SiO_4$ tetrahedra linked to each other by the sharing of oxygen atoms. This framework structure contains large and small cavities interconnected by channels as in the case of Y-type zeolites. These cavities and channels which are generally uniform in size are occupied by cations and water molecules. The cations may be mobile and therefore can undergo ion-exchange. In view of the mobility of the cations, it is believed that zeolitic materials behave like solid electrolytes. The water molecules may be removed reversibly by the application of heat, which in most cases leaves intact a highly porous crystalline structure. As the ratio of silica to alumina increases, the zeolitic material becomes progressively hydrophobic. Zeolites structurally related to ZSM-5 do not possess cavities; they have channel intersections and they are generally hydrophobic.

In terms of composition, zeolites can be regarded as being derived from silica. The substitution of some of the silicon atoms within the crystalline framework of the silica by trivalent aluminium, boron or iron atoms generates an anionic site in the environments of the aluminium atoms so that, in order to preserve electroneutrality, a cation such as that of the alkali or alkaline-earth metals is required. Considering the fact that tetra-coordinated aluminium atoms cannot share the same oxygen atom, it follows that y in the following empirical formula representing a typical zeolite cannot be less than 2:

$$M_{n/2}O : Al_2O_3 : y\ SiO_2 \bullet w\ H_2O$$

wherein M is a cation of valence n, y is 2 or greater and w is a value representing the water contained in the intracrystalline channel systems of the zeolite after synthesis or crystallization in nature.

Prior art developments have resulted in the synthesis of more than 150 zeolite types. To date, forty zeolite minerals are known.

Zeolites which belong to the Pentasil family are considered relevant to the present invention. More specifically, this invention relates to crystalline ironborosilicate zeolites which are structurally related to ZSM-5 zeolites.

U.S. Patent No. 3,702,886 which is here considered relevant discloses the crystalline aluminosilicate ZSM-5 and the process of preparing the same. This patent teaches the preparation of a crystalline alumino or gallosilicate and a crystalline alumino or gallogermanate by reacting silicon oxide or germanium oxide with aluminium oxide or gallium oxide in a range of specific ratios under specified reaction conditions. The product obtained has a specific X-Ray diffraction pattern. This patent is therefore limited to alumino and gallosilicate as well as alumino and gallogermanates. Patents disclosing the synthesis of ZSM-11 and ZSM-12 are likewise limited in scope to crystalline alumino or gallosilicates or germanates which also provide specific X-Ray diffraction patterns.

The production of the ZSM materials makes use of a mixed base system wherein sodium aluminate and a silicon-containing material are allowed to react in the presence of sodium hydroxide and an organic base template such as a tetrapropylammonium hydroxide or bromide under specified reaction conditions to yield the crystalline aluminosilicates.

U.S. Patent No. 3,328,119 which is considered relevant art, claims and teaches the process of preparing a crystalline aluminoborosilicate wherein the boria forms an integral part of the crystal framework structure of the zeolite material. However, the crystalline structure of the material is not related to the Pentasil family.

Another U.S. Patent No. 4,269,813 which is considered more relevant to this invention discloses a class of crystalline borosilicates designated as AMS-1B and a process of preparing same AMS-1B crystalline borosilicates are zeolitic materials which provide an X-Ray diffraction pattern similar to ZSM-5. This patent is limited in scope to borosilicates.

German Offonlegungsschrift No. 2,830,787 relates to crystalline alumino, boro, arseno, and antimony silicates having specified X-Ray diffraction patterns and to processes for preparing the same.

German Offenlegungsschrift No. 2,755,770 discloses the preparation of crystalline iron aluminosilicates and their uses.

Additional relevant prior art comprises U.S. Patents Nos. 4,029,716 and 4,078,009 which relate to a crystalline aluminosilicate zeolite having a silica to alumina ratio of at least 12 and a constraint index within the range of 1 to 12 and containing boron in an amount of at least 0.2 weight percent as a result of a reaction of the zeolite with a boron-containing compound.

European Patent A-41,621 describes the preparation of ZSM-5 using mixtures of $SiO_2$ and $Al(OH)_3$ and an aqueous amine solution in the absence of alkali. The crystallization is carried out in the presence of triamine, tetraamine and/or higher amine at from 100 to 200°C. Mention is made of replacement of the aluminium by boron and/or iron, wholly or partially. Only replacement by Boron is described in Example 3. No examples involving iron or boron + iron are given. No claims specifying the presence of Iron are made.

Patent GB-A-2,077,709 claims the inclusion of boron and iron into a zeolitic material which is not of the ZSM-5 type. Although isomorphous substitution of aluminium by other trivalent ions is well recognized, and confirmed here, there is no similarity between the method or the material described in the above patent and the subject matter of this invention.

SUMMARY OF THE INVENTION

The present invention, however, relates to a novel family of stable synthetic crystalline iron-borosilicates identified as ZKQ-1B and possessing a specified X-Ray diffraction pattern. It is understood that the iron and boron constitute an inherent part of the crystal framework structure of the material rather than a subsequent modification of the material composition.

The ZKQ-1B crystalline ironborosilicates according to the invention are formed by reacting the products formed as a result of a reaction between an iron-containing material and a boron containing material, such as boric acid, or an alkali tetrahydroborate with a silicon-containing material in a basic medium, which contains an alkali hydroxide or an alkaline earth hydroxide, an alkylammonium cation or a precursor thereof, optionally a mineralising agent such as sodium chloride and water. Under specified reaction conditions conducive to the formation of ZKQ-1B, the zeolite product is crystallised out from the solution with the iron and boron already contained within the crystal framework prior to physical separation of the product from the mother liquor. It will be understood that any modification of the crystallised ironborosilicate zeolite subsequent to its formation using such techniques as metal impregnation or deposition, cation exchange, is to be clearly distinguished from the process of the present invention.

Broadly speaking, according to the present invention, there is provided a crystalline ironborosilicate product, which comprises a molecular sieve material having the following composition in terms of mole ratios of oxides:

$$1.0 \pm 0.3\ M_{n/2}O : (\ a\ Fe_2O_3 : b\ B_2O_3\ ) : y\ SiO_2 \cdot z\ H_2O \qquad (1)$$

wherein M is selected from the group comprising hydrogen cation, ammonium cation, monovalent and divalent metal cations such as alkali metal cations alkaline-earth metal cations, a catalytically active metal cation and mixtures thereof; n is its valence; a and b are each greater than zero but less than 1 such that a + b = 1; y is a value of at least 6; z is between zero and about 500.

DESCRIPTION OF PREFERRED EMBODIMENTS

In accordance with a preferred embodiment of the invention such crystalline ironborosilicate provides an X-Ray diffraction pattern which comprises the following diffraction lines as shown in Table I.

3

## Table I

| Interplanar spacings, d (Å) | Relative Intensity |
|---|---|
| 11.2 ± 0.2 | w - s |
| 10.05 ± 0.2 | w - ms |
| 9.05 ± 0.15 | vw |
| 7.50 ± 0.15 | w |
| 7.13 ± 0.15 | vw |
| 6.71 ± 0.15 | vw |
| 6.40 ± 0.15 | w |
| 6.04 ± 0.1 | w |
| 5.7 ± 0.1 | w |

4

| | |
|---|---|
| 5.60 ± 0.1 | w |
| 5.13 ± 0.1 | vw |
| 5.00 ± 0.1 | w |
| 4.62 ± 0.08 | w |
| 4.26 ± 0.08 | w |
| 4.02 ± 0.08 | w |
| 3.83 ± 0.05 | vs |
| 3.71 ± 0.05 | s |
| 3.65 ± 0.05 | m – s |
| 3.43 ± 0.05 | w |
| 3.33 ± 0.05 | w |
| 3.26 ± 0.05 | vw |
| 3.05 ± 0.05 | w |
| 2.99 ± 0.02 | w |
| 2.86 ± 0.02 | vw |
| 2.78 ± 0.02 | vw |
| 2.73 ± 0.02 | vw |
| 2.61 ± 0.02 | vw |
| 2.49 ± 0.02 | w |
| 2.39 ± 0.02 | vw |
| 2.00 ± 0.02 | w– m |
| 1.95 ± 0.02 | vw |
| 1.91 ± 0.02 | vw |
| 1.87 ± 0.02 | vw |
| 1.76 ± 0.02 | vw |
| 1.66 ± 0.02 | vw |

These data were obtained by standard X-Ray diffraction techniques, using the K-alpha doublet of copper radiation. In Table I the relative intensities are given in terms of the symbols:

vs    very strong
s    strong
ms    medium strong

5

m      medium
mw    medium weak
w      weak
vw    very weak

It will be understood that the above X-Ray diffraction pattern is characteristic of all the species of ZKQ-1B compositions. Minor shifts in interplanar spacings and minor variations in relative intensities may occur as a result of ion-exchange of sodium ions or other alkaline metal ions with other cations and of heat treatment; on the whole, however, the diffraction pattern will substantially be the same.

In another instance, the claimed crystalline ironborosilicate which is not yet activated or calcined at high temperatures can be generally represented in terms of the mole ratios of oxides by equation 2:

$$1.0 \pm 0.3 \, ( x \, R_2O \, + \, ( 1 - x) \, M_{n/2}O): (a \, Fe_2O_3: b \, B_2O_3): y \, SiO_2 \cdot z \, H_2O \qquad (2)$$

wherein R is an alkylammonium cation, M is at least one cation of valence n, a and b are each greater than 0 but less than 1 so that $a + b = 1$, y is at least 6 and z is a value between zero and 500, and x is greater than 0 but less than 1.

Table II summarizes the values that $y/(a + b)$ may assume.

Table II

| | Broad | Suitable | Preferred | More preferred |
|---|---|---|---|---|
| $y/(a + b)$ | 6-500 | 6-300 | 6-160 | 6-130 |

Preferably, z in equation (2) is within the range of zero to about 40.

In the general formulations represented by the above equations, M can be substituted at least in part by other cations using such techniques well known in the art, for example, ion-exchange. These cations are preferably those which render the ZKQ-1B crystalline ironborosilicate zeolites catalytically active especially in the conversion of hydrocarbons. Such cations or mixtures thereof include metals from Groups 1B, 11B, V111, A1, rare earth metals, hydrogen, noble metals and other catalytically active metals known in the art. They can constitute anywhere from about 0.05 to about 25 weight percent of the ZKQ-1B crystalline ironborosilicate.

An X-Ray powder diffraction pattern of ZKQ-1B crystalline ironborosilicate indicating the significant lines are shown in Table III, which gives values that are characteristic of ZKQ-1B crystalline ironborosilicate having the oxide mole formula given in equation (1), which ironborosilicate has been calcined at 538° C in air for 5 hours.

Table III

| Interplanar spacings, d (Å) | | | Relative Intensity |
|---|---|---|---|
| 11.1 | ± | 0.2 | w-s |
| 10.04 | ± | 0.2 | w-ms |
| 7.56 | ± | 0.15 | vw |
| 6.71 | ± | 0.15 | vw-w |
| 6.40 | ± | 0.15 | vw-w |
| 6.00 | ± | 0.10 | w |
| 5.71 | ± | 0.1 | vw-w |
| 5.60 | ± | 0.1 | w |
| 5.01 | ± | 0.1 | w |
| 4.62 | ± | 0.08 | w |
| 4.36 | ± | 0.08 | w |
| 4.27 | ± | 0.08 | w |
| 4.01 | ± | 0.08 | w |
| 3.858 | ± | 0.05 | vs |
| 3.74 | ± | 0.05 | s |
| 3.648 | ± | 0.05 | m-s |
| 3.45 | ± | 0.05 | w |
| 3.32 | ± | 0.05 | w |
| 3.255 | ± | 0.05 | vw |
| 3.054 | ± | 0.05 | w |
| 2.985 | ± | 0.02 | w |
| 2.867 | ± | 0.02 | vw |
| 2.734 | ± | 0.02 | vw |
| 2.490 | ± | 0.02 | vw |
| 2.396 | ± | 0.02 | vw |
| 2.010 | ± | 0.02 | w-mw |
| 1.998 | ± | 0.02 | w-mw |

7

EP 0 148 038 B1

| | | |
|---|---|---|
| 1.954 ± 0.02 | | vw |
| 1.918 ± 0.02 | | vw |
| 1.873 ± 0.02 | | vw |
| 1.760 ± 0.02 | | vw |
| 1.668 ± 0.02 | | vw |

In table IV is presented the X-Ray diffraction pattern of a ZKQ-1B crystalline ironborosilicate, represented by equation (2), which has been dried at 160°C after having been separated from the mother liquor by filtration and washed copiously with water. This pattern shows the following significant lines:

## Table IV

| Interplanar spacings d (Å) | Relative intensity |
|---|---|
| 11.1 ± 0.2 | mw-s |
| 10.0 ± 0.2 | mw-s |
| 9.0 ± 0.15 | vw |
| 7.45 ± 0.15 | w |
| 7.13 ± 0.15 | vw |
| 6.71 ± 0.15 | vw |
| 6.40 ± 0.15 | w |
| 6.04 ± 0.15 | w |
| 5.63 ± 0.1 | w |
| 5.52 ± 0.1 | w |
| 5.13 ± 0.1 | vw |
| 5.00 ± 0.1 | w |
| 4.62 ± 0.08 | w |
| 4.36 ± 0.08 | w |
| 4.26 ± 0.08 | w |
| 4.00 ± 0.08 | w |

8

| | | | |
|---|---|---|---|
| 3.83 | ± | 0.05 | vs |
| 3.70 | ± | 0.05 | s |
| 3.63 | ± | 0.05 | m-s |
| 3.42 | ± | 0.05 | w-mw |
| 3.32 | ± | 0.05 | w-mw |
| 3.24 | ± | 0.05 | vw |
| 3.05 | ± | 0.05 | w-mw |
| 2.98 | ± | 0.02 | w-mw |
| 2.84 | ± | 0.02 | vw |
| 2.77 | ± | 0.02 | vw |
| 2.72 | ± | 0.02 | vw |
| 2.59 | ± | 0.02 | vw-w |
| 2.47 | ± | 0.02 | vw-w |
| 2.38 | ± | 0.02 | vw |
| 2.00 | ± | 0.02 (doubled) | w-mw |
| 1.95 | ± | 0.02 | vw |
| 1.90 | ± | 0.02 | vw |
| 1.86 | ± | 0.02 | vw |
| 1.76 | ± | 0.02 | vw |
| 1.65 | ± | 0.02 | vw |

A typical X-Ray diffraction pattern comprising the diffraction lines and assigned intensities is shown in Table V for a crystalline ironborosilicate zeolite, which has been exchanged twice with ammonium ions, copiously washed with deionised water and calcined at 538°C for 10 hours.

## Table V

| Interplanar spacings d ($\overset{\circ}{A}$) | | | Relative Intensity |
|---|---|---|---|
| 11.2 | ± | 0.2 | w-s |
| 10.07 | ± | 0.2 | w-ms |
| 7.49 | ± | 0.15 | vw |
| 6.71 | ± | 0.15 | vw-w |
| 6.39 | ± | 0.15 | w |
| 5.99 | ± | 0.10 | w |
| 5.71 | ± | 0.10 | vw-w |
| 5.59 | ± | 0.10 | w |
| 5.00 | ± | 0.10 | w |
| 4.62 | ± | 0.08 | w |
| 4.36 | ± | 0.08 | w |
| 4.27 | ± | 0.08 | w |
| 4.00 | ± | 0.08 | w |
| 3.85 | ± | 0.05 | vs |
| 3.73 | ± | 0.05 | s |
| 3.65 | ± | 0.05 | m-s |
| 3.45 | ± | 0.05 | w |
| 3.31 | ± | 0.05 | w |
| 3.055 | ± | 0.05 | w |
| 2.99 | ± | 0.02 | w |
| 2.875 | ± | 0.02 | vw |
| 2.74 | ± | 0.02 | vw |
| 2.61 | ± | 0.02 | vw |
| 2.49 | ± | 0.02 | vw |
| 2.40 | ± | 0.02 | vw |
| 2.012 | ± | 0.02 | w-mw |
| 1.998 | ± | 0.02 | w-mw |

$$1.953 \pm 0.02 \qquad\qquad vw$$

$$1.918 \pm 0.02 \qquad\qquad vw$$

$$1.766 \pm 0.02 \qquad\qquad vw$$

$$1.670 \pm 0.02 \qquad\qquad vw$$

The ZKQ-1B crystalline ironborosilicate is prepared by the method which comprises:

(1) preparing a mixture consisting either of the integral reaction products between an iron-containing compound and an alkali tetrahydroborate, or of an iron-containing compound and a boron-containing compound, together with a source of silicon, an alkylammonium cation, a mineralization agent such as sodium chloride and water and a source of hydroxyl ions. Examples of sources of silicon are LudoxTM, Nalcoag 1030TM and waterglass such as Brand "O";

(2) maintaining said mixture under suitable reaction conditions to effect formation of said ironborosilicate, said reaction conditions including a reaction temperature between 25°C to about 300°C, a pressure of at least the vapour pressure of water at said temperature and a reaction time sufficient to effect crystallisation of said ironborosilicate.

Examples of alkali tetrahydroborates are sodium tetrahydroborate, potassium tetrahydroborate and lithium tetrahydroborate. Examples of alkylammonium cations are: tetrapropylammonium bromide, tetrapropylammonium hydroxide, and precursors of said cations such as an alkylamine, an alkylamine plus an alkyl halide. For instance, by reacting tri-n-propylamine and n-bromopropane under suitable conditions, tetrapropylammonium bromide is formed. Hexamethylene diamine is an example of an alkylamine which may be used.

The mixture used in the method of preparation of ZKQ-1B crystalline ironborosilicate can be further characterised in terms of mole ratios of oxides in the ranges presented in Table VI.

## Table VI

|  | BROAD | PREFERRED | MOST PREFERRED |
|---|---|---|---|
| $SiO_2/B_2O_3$ | 6-500 | 6-300 | 6-200 |
| $SiO_2/Fe_2O_3$ | 6-500 | 6-300 | 6-150 |
| $OH^-/SiO_2$ | 0.01-11 | 0.1-2 | 0.1-1 |
| $R_2O/(R_2O+M_{n/2}O)$ | 0.1-1 | 0.2-0.97 | 0.3-0.97 |
| $H_2O/OH^-$ | 10-4000 | 10-500 | 10-500 |

wherein R is an alkylamine or alkylammonium cation, preferably tetra-n-propylammonium cation, M is at least one cation of valence n such as an alkali metal or an alkaline-earth metal cation.

When an alkali metal hydroxide is used in the preparation to provide a source of alkali metal ions for electrovalent neutrality and to control the pH of the reaction mixture, the values of the ratio of $OH^-/SiO_2$ in Table VI should be such as to render the pH of the system broadly within the range of about 9 to about 13.5. An alkaline pH within that range favours the formation of ZKQ-1B crystalline ironborosilicate. The pH of the system falling within the range of about 9 to 12 is to be preferred as it favours the incorporation of iron and boron in the framework structure of the molecular sieve. Each ingredient is added in an amount calculated to give the desired molar composition in the resulting mixture. For example, by regulating the amount of boron (represented by $B_2O_3$) and iron (represented by $Fe_2O_3$) in the reaction mixture, the $SiO_2/B_2O_3$ and $SiO_2/Fe_2O_3$ molar ratios in the final product can be varied within the ranges shown in Table VI. In view of the fact that commercially available materials utilised in the preparation of the ironborosilicate do contain very minor amounts of aluminium as an impurity, the $SiO_2$:$Al_2O_3$ ratio in the synthesised ironborosilicates can be anywhere from 1500 and up.

Reaction conditions conducive to the formation of crystalline ironborosilicates include heating the reaction mixture from about 25°C to 300°C for a period running from less than 24 hours to 4 weeks under autogeneous pressure. Especially preferred reaction conditions include a temperature around 165°C and a crystallisation time of about a week. It is generally considered that the formation of zeolites requires low temperature hydrothermal conditions with concurrent low autogeneous pressure at saturated water vapour pressure and a high degree of supersaturation of the gel components, thereby leading to the nucleation of a large number of crystals. Generally the presence of a relatively high amount of sodium chloride promotes the mineralisation of zeolites.

Calcination of crystalline ironborosilicate previously washed free of soluble salts is carried out in air at temperatures anywhere from 260°C to 590°C. Although said crystalline ironborosilicate is thermally highly stable, it is advisable not to calcine it at extreme temperatures because of the risk of modifying its structure or causing total collapse of its structure. Preferably, the calcination temperature required to remove the alkylammonium cation from the "as synthesised" crystalline ironborosilicate need not exceed 540°C.

Generally, the hydrogen form of ZKQ-1B is prepared by repeated treatment with an aqueous solution of ammonium chloride at 100°C under autogeneous pressure for a period anywhere from 1 hour to 24 hours. Ammonium nitrate and ammonium acetate can also be used in ammonium exchange. After being washed free of soluble salts with water, dried at 110°C, and then calcined at 538°C for a period anywhere from 3 hours to 15 hours, the ammonium form of ZKQ-1B crystalline ironborosilicate is converted into the hydrogen form which form is particularly favoured in the respective catalytic conversion of methanol and syngas into high-octane liquid hydrocarbons.

The crystalline ironborosilicate can be modified for certain applications in hydrocarbon conversions by impregnation or ion-exchange techniques well known in the art. It may suitably be compounded with certain inorganic materials which include active and inactive materials for organic conversion processes. Examples of inorganic materials are clays, silica, alumina, silica-alumina, silica-zirconia, silica-magnesia,etc. The matrix can be in the form of a hydrogel or cogel which subsequently provides a porous matrix material. The final composite may contain between 20 to 85 weight percent of crystalline ZKQ-1B

Conversion of simple alcohols into high-octane gasoline

The conversion of methanol into high-octane gasoline by contacting said alcohol with HZSM-5 catalyst is described in U.S.Patent No. 3,911,041. This process is considered relevant art. U.S Patent No. 4,292,458 which is also considered relevant to the present invention discloses the use of a crystalline borosilicate zeolite in the conversion of methanol into synthetic high-octane gasoline.

It has been discovered that the acid form of crystalline ZKQ-1B ironborosilicate is active in the conversion of methanol and ethanol respectively into high-octane gasoline.

There is provided a process for the conversion of simple alcohols such as methanol or ethanol selectively into highly aromatic gasoline, which process involves contacting said feedstock or its products of dehydration with the hydrogen form of ZKQ-1B crystalline ironborosilicate.

Use of ZKQ-1B crystalline ironborosilicate zeolite in the conversion of syngas into high-octane gasoline.

The Fisher-Tropsch synthesis which generally suffers from lack of selectivity produces a wide spectrum of hydrocarbons and oxygen-containing products including low-octane gasoline. Extensive and costly facilities are thus needed to separate and upgrade the products. Several approaches are being pursued in the development of highly selective catalysts for synthetic gas conversion. One of these approaches which seems to reflect current thinking regarding the mechanism of the reactions is based on the interception of intermediates formed during the Fisher-Tropsch synthesis on iron catalyst. In this approach, primary low-molecular-weight intermediates derived from $CO$-$H_2$ synthesis reaction are intercepted before the normal Fisher-Tropsch polymerisation process occurs. This is effected in situ by introducing a second catalyst function which promotes the formation of higher molecular-weight products by way of a different mechanism. This second function is provided by the active Bronsted or Lewis sites within the intracrystalline cavities, if any, and pores or channel system of zeolites. Zeolites possessing shape-selective properties are ideally suited for this purpose.

U.S. Patent No. 4,172,843 which is considered relevant to the present invention discloses the use of an intimate mixture of an iron-containing Fisher-Tropsch component and a volume excess of an acidic aluminosilicate crystalline zeolite in the direct conversion of syngas to high-octane predominantly olefinic naphtha.

In U.S. Patent No. 4,086,262 there is provided a single stage process for the conversion of synthesis gas into gasoline wherein the catalyst is an intimate mixture of an iron-containing F-T catalyst and a ZSM-5 type catalyst. This patent is considered relevant art.

In Europeant Patent Application No. 8030773.0, there is disclosed a process for converting syngas into either gasoline or higher-boiling distillate material wherein the catalyst in the first stage reactor is an iron-containing F-T catalyst and, in the second stage reactor there is a crystalline aluminosilicate zeolite.

U.S. Patent No. 4,046,830 discloses a method for upgrading Fisher-Tropsch synthesis products over a ZSM-5 type zeolite.

European Patent Application No. 79302666.7 (publication number EP-B-12534) discloses a method for preparing a synthesis gas conversion composite catalyst consisting of iron or iron oxide, a hydrogel matrix and an acidic crystalline aluminosilicate zeolite, preferably a ZSM-5 type zeolite.

From the foregoing, it will be appreciated that, for the production of high-octane gasoline or olefinic naphtha directly from syngas, the conversion catalytic system employed has been based on the use of iron catalysts physically admixed with a relatively large proportion of crystalline zeolite such as ZSM-5. In this type of configuration the crystalline zeolite intercepts and scavenges the olefin intermediate products and effects synthesis of high-octane aromatic gasoline or olefinic naphtha.

Contrary to the above-mentioned catalytic system, the syngas conversion catalyst of the present invention is a single particle catalyst wherein the iron component is not only not physically admixed with the zeolite component but it forms part and parcel of the crystalline structure of the zeolite, said zeolite material being an ironborosilicate crystalline zeolite in the acidic form.

The present invention, then, concerns the use of an ironborosilicate crystalline zeolite as a syngas conversion catalyst for the production of high-octane liquid hydrocarbons. In the formulation of such a syngas conversion catalyst, no iron either in metallic or oxide form is added and physically admixed with the crystalline ironborosilicate zeolite. The said crystalline ironborosilicate zeolite may be composited with siliceous materials such as silica, alumina, silica-alumina, silica-zirconia, etc.

Prior to its use for the conversion of syngas, the crystalline ironborosilicate zeolite previously exchanged with ammonium ions, washed free of soluble salts, and calcined at $538\degree$C, is treated with syngas at temperatures of about $290\degree$C to $340\degree$C for periods of time ranging from 3 hours to about 24 hours.

The conversion of syngas to high-octane gasoline using the pretreated catalyst is conveniently carried out at a temperature of $250\degree$C to $315\degree$C and a pressure of 446 kPa to 6996.1 kPa. The product gasoline has a boiling range of less than $204\degree$C at a 90% overhead. The conversion syngas catalyst produces a highly olefinic, branched and aromatic product spectrum mostly concentrated in the region below $C_{11}$.

The process of this invention is preferably carried out at temperatures ranging from $275\degree$C to about $305\degree$C; at gas hourly space velocities ranging from 400 to 6000, based on fresh feed and total catalyst volume; at hydrogen to carbon oxide ratios from 0.5:1 to 2:1 and more desirably about 1:1; and pressures ranging from 446 kPa to 6996.1 kPa and more preferably from 1135.6 kPa to 2859.2 kPa.

The present invention will be further understood by the following examples, which are given for illustrative purposes only and are thus not intended to limit the scope of the invention.

## EXAMPLE I

12.7 g. of ferric ammonium sulfate, $FeNH_4(SO_4)_2.12H_2O$ were dissolved in 100 ml of deionised water (Solution 1). 1.52 g of sodium tetrahydroborate were dissolved in 80 ml of deionised water (Solution 2). A solution (Solution 3) containing 10.64 g of sodium hydroxide, 40 g of sodium chloride and 47.5 g of tetrapropylammonium bromide was prepared in 250 ml of deionised water.

Solution 2 was slowly added to Solution 1 with stirring in a Waring blender whereupon a voluminous black precipitate was formed with simultaneous liberation of hydrogen. Solution 3 was then added to the resulting reaction products with vigorous stirring in order to fully disperse the precipitate. This was then followed by the quick addition of 200 g of Nalcoag™ 1030 (30% colloidal $SiO_2$) whereupon a gel was instantaneously formed into which the black precipitate was dispersed. The vigorous stirring was maintained for a few minutes to ensure complete homogenization. The gel whose pH was 11.15 was transferred into a Teflon™-lined autoclave (Teflon stands for polytetrafluoroethylene) and allowed to age for a few hours at room temperature. The autoclave was sealed and placed in an oven. The temperature was raised to $165\degree$C and held at this value for a period of 6 to 7 days. The pH of the mother liquor was 11.3. The solid product obtained was filtered and washed copiously with deionised water in order to remove soluble salts. A portion of it was dried at about $160\degree$C in air and subjected to X-Ray analysis. Its X-Ray diffraction pattern comprising the diffraction lines is presented in Table I.

Another portion of the washed solid product was calcined at 538°C in air for 5 hours. The X-Ray diffraction lines provided by the calcined product are shown in Table III.

Chemical analysis of the calcined sample in the sodium hydrogen form gave the following results:

| | |
|---|---|
| Weight percent $SiO_2$ | 93.8 |
| Weight percent $Fe_2O_3$ | 2.85 |
| Weight percent $B_2O_3$ | 0.70 |
| Weight percent $Na_2O$ | 1.30 |
| Weight percent volatiles | 1.35 |
| Total | 100.00 |

| | |
|---|---|
| $SiO_2:B_2O_3$ | 48.2 |
| $SiO_2 : Fe_2O_3$ | 87.5 |
| $SiO_2:(Fe_2O_3 + B_2O_3)$ | 31.0 |
| $Na_2O:(Fe_2O_3 + B_2O_3)$ | 0.42 |

EXAMPLE 2

The process of Example I was repeated, using different quantities of starting materials.

A. Solution 1 contained 6.35 g of ferric ammonium sulfate dissolved in 100 ml of deionised water.

B. Solution 2 contained 2.65 g of sodium tetrahydroborate dissolved in 75 g of deionised water.

C. Solution 3 contained 7.97 sodium hydroxide, 40 g of sodium chloride and 47.5 g of tetrapropylammonium bromide dissolved in 250 ml of deionised water.

D. 130 g of Nalcoag*1030 was used.

The pH of the gel was 12.4. The product obtained was well crystallised and provided a X-Ray diffraction pattern similar to that shown in Table I.

EXAMPLE 3

A. Solution 1 contained 20 g of ferric ammonium sulfate dissolved in 125 ml of deionised water.

B. Solution 2 contained 2.5 g of sodium tetraborate dissolved in 80 ml of deionized water.

C. Solution 3 was made up by dissolving 10.64 g of sodium hydroxide, 40 g of sodium chloride and 47.5 g of tetrapropylammonium bromide in 250 ml of deionised water.

D. 200 g of Nalcoag * 1030 were used as a source of silica. The pH of the gel was 10.1. The X-Ray diffraction pattern of the crystalline product was similar to that shown in Table I.

EXAMPLE 4

A. Solution 1 was made up by dissolving 38.1 g of ferric ammonium sulfate in 150 ml of deionised water.

B. Solution 2 was made up by dissolving 4.5 g of sodium tetrahydroborate in 80 ml of deionised water.

C. Solution 3 was prepared by dissolving 16.6 g of NaOH, 49 g NaCl and 47.5 g of tetrapropylammonium bromide in 275 ml of deionised water.

D. 200 g of Nalcoag * 1030 was used as the source of silica. The pH of the gel was 10.47. The X-Ray diffraction pattern of the crystalline product was similar in all respects to that presented in Table I.

EXAMPLE 5

A. Solution I was prepared by dissolving 304.8 g of ferric ammonium sulfate in 1200 ml of hot deionised water.

B. Solution 2 was made up by dissolving 37 g of sodium tetrahydroborate in 200 ml of deionised water.

C. Solution 3 was prepared by dissolving 380 g of TPABr (tetrapropyl ammonium bromide), 96 g of

* Trademark

NaOH and 320 g of NaCl in 1000 ml of deionised water.

D. 1550 g of Nalcoag * 1030 were used as the source of silica and the liquid was diluted with 1480 ml of deionised water and thoroughly mixed before use. The pH of the gel was 9.6. The X-Ray diffraction pattern was similar in all respects to that obtained from the product of Example I.

EXAMPLE 6

A solution (1) containing 3.0 g of boric acid, 8.5 g of sodium hydroxide, 94.5 g tetrapropylammonium bromide, and 500 ml of deionised water was prepared. Another solution (2) was prepared by dissolving 10 g of ferric ammonium sulfate and 40 g of sodium chloride in 200 ml of deionised water. Solutions (1) and (2) were added simultaneously to 150 g of Nalcoag * 1030 with vigorous stirring. After allowing the gel to age for a few hours it was transferred to an autoclave. The sealed autoclave was heated at 165$^\circ$C for seven days. The crystalline product was separated from the mother liquor by filtration and washed copiously with deionised water. The crystalline product provided an X-Ray diffraction pattern similar to that obtained with the product of Example I.

EXAMPLE 7

A portion of each of the products obtained from Examples 1 to 5 was copiously washed with deionised water to remove soluble salts. Washing was considered sufficient when the filtrate gave negative results with the silver nitrate and barium chloride tests. The sample was then calcined in air at 375$^\circ$C for 15 hours in order to remove the tetrapropylammonium ion and to render more labile the sodium ions within the sample. The calcined sample was then exchanged with an aqueous solution of 5M ammonium chloride at 100$^\circ$C for 15 hours, using 15 ml of the solution for each gram of sample treated. A second exchange was performed using fresh solution of ammonium chloride for 5 hours. The ammonium-exchanged sample was then filtered and repeatedly washed with deionised water to ensure complete removal of soluble salts. Conversion to the hydrogen form was effected by final calcination of the sample at 538$^\circ$C for 10 hours, using a programmed heating ramp rate of 3$^\circ$C per minute. A typical X-Ray diffraction pattern showing all the diffraction lines with their corresponding relative intensities is shown in Table V. The hydrogen form of the five samples are herein designated as HZKQ-1B1, HZKQ-1B2, HZKQ-1B3, HZKQ-1B4, and HZKQ-1B5, respectively. These samples are particularly active in the catalytic conversion of simple alcohols and syngas in high-octane gasoline.

EXAMPLE 8

(Gasoline from methanol)

A dual stage reactor system comprising among other things an essentially adiabatic dehydration reactor coupled in series with an essentially adiabatic conversion reactor was used.

The dehydration reactor was loaded with gamma-alumina. The conversion reactor was loaded with 12 g of HZKQ-1B1 crystalline ironborosilicate zeolite catalyst. Prior to start-up, the inlet and outlet temperatures of the dehydration reactor and the conversion reactor were lined out at 315$^\circ$C and 371$^\circ$C and at 371$^\circ$C and 400$^\circ$C, respectively. Methanol was then pumped at a weight hourly space velocity of 1 and vapourised by means of a pre-heater. The methanol vapour was partially dehydrated over the gamma-alumina to yield a equilibrium mixture of methanol and dimethyl ether, which mixture was converted into high-octane gasoline and water. The pressure of the process was maintained at 892 kPa. Small quantity of non-condensable light $C_1$-$C_4$ hydrocarbons was produced. Analysis of the liquid organic product showed that it was similar to all intents and purposes to premium gasoline. The results are shown in Table VII.

* Trademark

## TABLE VII

Dehydration reactor, Inlet temperature, °C = 343

Dehydration reactor, Outlet temperature, °C = 371

Conversion reactor, Inlet temperature, °C = 371

Conversion reactor, Outlet temperature, °C = 399

WHSV (methanol over catalyst)       = 1.0

Pressure, kPa       = 2075

### Product, wt % of charge

| | |
|---|---|
| Hydrocarbons | 35.1 |
| $H_2O$ | 64.5 |
| $H_2$ | 0.01 |
| CO | 0.10 |
| $CO_2$ | 0.30 |

### Wt % of hydrocarbons

| | |
|---|---|
| $C_5^+$ liquid hydrocarbons | 75.0 |
| Aromatics, wt % of $C_5^+$ liquid hydrocarbons | 26.0. |

### EXAMPLE 9

(High-octane gasoline from synthesis gas)

A fixed-bed catalyst operation was employed. 2 g of HZKQ-1B3 mixed with ground quartz, in ratio 1:1 were placed in the tubular reactor. Prior to syngas gas conversion, the catalyst was pretreated with syngas having an $H_2$:CO ratio of 1 at 325°C and 101 kPa and at a flowrate of 100 ml per minute for 15 hours.

The one-stage syngas conversion was conducted in a downflow manner at 1447 kPa using a synthesis gas with an $H_2$:CO ratio of 1. The operating temperature was 300°C and the space velocity was 450. The weight % carbon converted to hydrocarbons was 60.9 and methane in hydrocarbon product was 11.2 weight percent. Chromatographic analysis of the $C_5^+$ product showed it to be highly olefinic and aromatic in nature. Furthermore the product spectrum is mostly concentrated in the region below $C_{11}$. Comparison of the product's chromatogram with that of a premium grade gasoline showed at least qualitatively a striking similarity between the two. The results appear in Table VIII.

### EXAMPLE 10

The process of Example 9 was repeated with HZKQ-1B4 The results obtained are presented in Table VIII. The weight percent of methane in the effluent was 10.4, which is relatively low.

EXAMPLE 11

In this example the synthesis was carried out in a Continuous Stirred-Tank Reactor (CSTR) of the Berty-Carberry type.

200 ml (138.91 g) of HZKQ-1B5 were loaded into the reactor. Pretreatment of the catalyst was conducted at 325°C for about 16 hours at 8 p.s.i. with synthesis gas having an $H_2$:CO ratio of 1.13 and at a space velocity of 600.

Synthesis was conducted using a syngas with an $H_2$:CO ratio of 1.13. The operating pressure and temperature were 1447 kPa and 300°C, respectively. The space velocity was 600.

The weight percent of methane in total effluent was was only 12.4. The results are present in Table VIII.

## TABLE VIII

## Syngas conversion at 1447 kPa

|  | Example 9 | Example 10 | Example 11 |
|---|---|---|---|
| $H_2$: CO   Feed ratio | 1.0 | 1.0 | 1.18 |
| Temperature, °C | 300 | 300 | 300 |
| Space velocity $(h^{-1})$ | 450 | 600 | 600 |
| Conversion Wt. percent |  |  |  |
| CO | 70.2 | 61.1 | 60.84 |
| $H_2$ | 47.7 | 54.2 | 37.82 |
| Weight % carbon converted to hydrocarbons | 60.9 | 63.8 | 58.7 |

17

### Total Effluent, Wt. percent

| | | | |
|---|---|---|---|
| Hydrocarbons | 23.8 | 23.8 | 24.59 |
| $H_2$ | 3.9 | 3.6 | 4.04 |
| CO | 22.5 | 26.8 | 26.19 |
| $CO_2$ | 29.8 | 27.4 | 27.1 |
| $H_2O$ | 20.0 | 18.4 | 18.04 |

### Hydrocarbon wt. percent

| | | | |
|---|---|---|---|
| $C_1 + C_2$ | 17.5 | 19.1 | 19.26 |
| $C_3 + C_4$ | 13.3 | 15.1 | 15.29 |
| $C_5+$ | 69.2 | 65.8 | 65.4 |
| Aromatics in $C_5+$, wt. percent | 25.7 | 19.5 | 18.0 |
| Liquid Product 90% Point, °C | 197 | 198 | 195. |

## Claims

1. A method for synthesizing a crystalline ironborosilicate which comprises a molecular sieve material providing an X-Ray diffraction pattern having the following diffraction lines and relative intensities

| Interplanar spacings, d ($\overset{\circ}{A}$) | Relative Intensity |
|---|---|
| 11.2 ± 0.2 | w − s |
| 10.05 ± 0.2 | w − ms |
| 9.05 ± 0.15 | vw |
| 7.50 ± 0.15 | w |
| 7.13 ± 0.15 | vw |
| 6.71 ± 0.15 | vw |
| 6.40 ± 0.15 | w |
| 6.04 ± 0.1 | w |
| 5.7 ± 0.1 | w |
| 5.60 ± 0.1 | w |
| 5.13 ± 0.1 | vw |
| 5.00 ± 0.1 | w |
| 4.62 ± 0.08 | w |
| 4.26 ± 0.08 | w |

| | |
|---|---|
| 4.02 ± 0.08 | w |
| 3.83 ± 0.05 | vs |
| 3.71 ± 0.05 | s |
| 3.65 ± 0.05 | m - s |
| 3.43 ± 0.05 | w |
| 3.33 ± 0.05 | w |
| 3.26 ± 0.05 | vw |
| 3.05 ± 0.05 | w |
| 2.99 ± 0.02 | w |
| 2.86 ± 0.02 | vw |
| 2.78 ± 0.02 | vw |
| 2.73 ± 0.02 | vw |
| 2.61 ± 0.02 | vw |
| 2.49 ± 0.02 | w |
| 2.39 ± 0.02 | vw |
| 2.00 ± 0.02 | w- m |
| 1.95 ± 0.02 | vw |
| 1.91 ± 0.02 | vw |
| 1.87 ± 0.02 | vw |
| 1.76 ± 0.02 | vw |
| 1.66 ± 0.02 | vw |

and having the following composition in terms of mole ratios of oxides:

$1.0 \pm 0.3\ M_{n/2}O : (a\ Fe_2O_3 : b\ B_2O_3) : y\ SiO_2 \cdot z\ H_2O$

wherein M is at least one cation of valence n, a and b are each greater than zero but less than 1, such that a + b = 1, y is at least 6 and z is a value between zero and 500, which method comprises
    a) providing a reaction mixture comprising:
        (1) the reaction products between an iron-containing compound and a boron-containing compound,
        (2) a silicon-containing material,
        (3) an alkali or alkaline earth hydroxide,

EP 0 148 038 B1

(4) an alkylammonium cation or a precursor thereof,
(5) optionally a mineralization agent, and
(6) water;
(b) maintaining said reaction mixture under conditions to effect formation of said ironborosilicate.

2. The method according to claim 1 wherein the boron-containing compound is an alkali tetrahydroborate.

3. The method according to claim 1 wherein the boron-containing compound is boric acid.

4. The method according to claim 1 which comprises maintaining said reaction mixture under an alkaline pH, at a reaction temperature between 25°C to 300°C, and for a time sufficient to effect crystallization of said ironborosilicate under autogeneous pressure at the reaction temperature.

5. The method of claim 4 wherein the reaction temperature is 90°C to 250°C.

6. The method of claim 5 wherein the reaction time is 8 hours to 7 days.

7. The method of claim 5 wherein said reaction mixture has a composition, in terms of mole ratio of oxides, falling within the following range:

$$SiO_2/(B_2O_3 + Fe_2O_3) = 5\text{-}500$$
$$R_2O/R_2O + M_{n/2}O = 0.2\text{-}0.97$$
$$OH^-/SiO_2 = 0.01\text{-}11$$
$$H_2O/OH^- = 10\text{-}4000$$

wherein R is an alkylammonium cation, M is an alkali metal or an alkaline earth metal and n is the valence of M.

8. A crystalline ironborosilicate zeolitic material having a composition in terms of mole ratios of oxides as follows:

$$1.0 \pm 0.3\ M_{n/2}O: (a\ Fe_2O_3 : b\ B_2O_3) : y\ SiO_2 \cdot z\ H_2O$$

wherein M is at least one cation of valence n, a is greater than zero but less than 1, b is greater than zero but less than 1 such that a + b = 1, y is at least 6, z is a value between zero and about 500, and providing an X-Ray diffraction pattern comprising the following diffraction lines and assigned strengths

| Interplanar spacings, d ($\overset{\circ}{A}$) | Relative Intensity |
|---|---|
| 11.2 ± 0.2 | w – s |
| 10.05 ± 0.2 | w – ms |
| 9.05 ± 0.15 | vw |
| 7.50 ± 0.15 | w |
| 7.13 ± 0.15 | vw |
| 6.71 ± 0.15 | vw |
| 6.40 ± 0.15 | w |
| 6.04 ± 0.1 | w |

21

| | |
|---|---|
| 5.7 ± 0.1 | w |
| 5.60 ± 0.1 | w |
| 5.13 ± 0.1 | vw |
| 5.00 ± 0.1 | w |
| 4.62 ± 0.08 | w |
| 4.26 ± 0.08 | w |
| 4.02 ± 0.08 | w |
| 3.83 ± 0.05 | vs |
| 3.71 ± 0.05 | s |
| 3.65 ± 0.05 | m – s |
| 3.43 ± 0.05 | w |
| 3.33 ± 0.05 | w |
| 3.26 ± 0.05 | vw |
| 3.05 ± 0.05 | w |
| 2.99 ± 0.02 | w |
| 2.86 ± 0.02 | vw |
| 2.78 ± 0.02 | vw |
| 2.73 ± 0.02 | vw |
| 2.61 ± 0.02 | vw |
| 2.49 ± 0.02 | w |
| 2.39 ± 0.02 | vw |
| 2.00 ± 0.02 | w–m |
| 1.95 ± 0.02 | vw |
| 1.91 ± 0.02 | vw |
| 1.87 ± 0.02 | vw |
| 1.76 ± 0.02 | vw |
| 1.66 ± 0.02 | vw |

9. The crystalline ironhorosilicate molecular sieve material of claim 8 which, following calcination at a temperature of about 260°C to about 550°C, provides an X-Ray diffraction pattern comprising the following diffraction lines and relative intensities

22

| Interplanar spacings, d (Å) | | | Relative Intensity |
|---|---|---|---|
| 11.1 | ± | 0.2 | w-s |
| 10.04 | ± | 0.2 | w-ms |
| 7.56 | ± | 0.15 | vw |
| 6.71 | ± | 0.15 | vw-w |
| 6.40 | ± | 0.15 | vw-w |
| 6.00 | ± | 0.10 | w |
| 5.71 | ± | 0.1 | vw-w |
| 5.60 | ± | 0.1 | w |
| 5.01 | ± | 0.1 | w |
| 4.62 | ± | 0.08 | w |
| 4.36 | ± | 0.08 | w |
| 4.27 | ± | 0.08 | w |
| 4.01 | ± | 0.08 | w |
| 3.858 | ± | 0.05 | vs |
| 3.74 | ± | 0.05 | s |
| 3.648 | ± | 0.05 | m-s |
| 3.45 | ± | 0.05 | w |
| 3.32 | ± | 0.05 | w |
| 3.255 | ± | 0.05 | vw |
| 3.054 | ± | 0.05 | w |
| 2.985 | ± | 0.02 | w |
| 2.867 | ± | 0.02 | vw |
| 2.734 | ± | 0.02 | vw |

| | | |
|---|---|---|
| 2.490 ± | 0.02 | vw |
| 2.396 ± | 0.02 | vw |
| 2.010 ± | 0.02 | w-mw |
| 1.998 ± | 0.02 | w-mw |
| 1.954 ± | 0.02 | vw |
| 1.918 ± | 0.02 | vw |
| 1.873 ± | 0.02 | vw |
| 1.760 ± | 0.02 | vw |
| 1.668 ± | 0.02 | vw |

**10.** The crystalline ironborosilicate of claim 8 wherein z is between zero and 50.

**11.** The crystalline ironborosilicate of claim 8 wherein a is equal to or greater than 0.05 and b is equal to or greater than 0.05 such that a + b = 1.

**12.** The crystalline ironborosilicate of claim 8 wherein y is between 6 and 500.

**13.** The crystalline ironborosilicate of claim 8 wherein M comprises a member selected from the group consisting of alkylammonium cation, hydrogen cation, a metal cation and mixtures thereof.

**14.** The crystalline ironborosilicate of claim 2 wherein y is between 6 and 500, a is equal to or greater than 0.05 and b is equal to or greater than 0.05, such that a + b = 1.

**15.** A crystalline ironborosilicate having a composition in terms of oxides as follows:

$$1.0 \pm 0.3 \ ( \ x \ R_2O \ + \ (1-x)M_{n/2}O) : (a \ Fe_2O_3 \ + \ b \ B_2O_3) : y \ SiO_2 \ \cdot \ z \ H_2O$$

wherein R is a tetrapropylammonium cation, M is an alkali metal cation of valence n, x is greater than zero but less or equal to 1, a and b are each greater than zero but less than 1 such that a + b = 1, y is at least 6 and z is between zero and 160.

**16.** The crystalline ironborosilicate formed by calcining the crystalline ironborosilicate according to claim 15 at a temperature between 260°C to 550°C and showing the following X-Ray diffraction lines and assigned strengths

| Interplanar spacings, d (Å) | Relative Intensity |
|---|---|
| 11.1 ± 0.2 | w-s |
| 10.04 ± 0.2 | w-ms |
| 7.56 ± 0.15 | vw |
| 6.71 ± 0.15 | vw-w |
| 6.40 ± 0.15 | vw-w |
| 6.00 ± 0.10 | w |
| 5.71 ± 0.1 | vw-w |
| 5.60 ± 0.1 | w |
| 5.01 ± 0.1 | w |
| 4.62 ± 0.08 | w |
| 4.36 ± 0.08 | w |
| 4.27 ± 0.08 | w |
| 4.01 ± 0.08 | w |
| 3.858 ± 0.05 | vs |
| 3.74 ± 0.05 | s |
| 3.648 ± 0.05 | m-s |
| 3.45 ± 0.05 | w |
| 3.32 ± 0.05 | w |
| 3.255 ± 0.05 | vw |

| | | | |
|---|---|---|---|
| 3.054 | ± | 0.05 | w |
| 2.985 | ± | 0.02 | w |
| 2.867 | ± | 0.02 | vw |
| 2.734 | ± | 0.02 | vw |
| 2.490 | ± | 0.02 | vw |
| 2.396 | ± | 0.02 | vw |
| 2.010 | ± | 0.02 | w-mw |
| 1.998 | ± | 0.02 | w-mw |
| 1.954 | ± | 0.02 | vw |
| 1.918 | ± | 0.02 | vw |
| 1.873 | ± | 0.02 | vw |
| 1.760 | ± | 0.02 | vw |
| 1.668 | ± | 0.02 | vw. |

17. The crystalline ironborosilicate of Claim 16 converted to the hydrogen form by ammonium exchange followed by calcination at a temperature between 375°C to 550°C and providing the following X-Ray diffraction lines and assigned strengths

| Interplanar spacings d ($\overset{\circ}{A}$) | | | Relative Intensity |
|---|---|---|---|
| 11.2 | ± | 0.2 | w-s |
| 10.07 | ± | 0.2 | w-ms |
| 7.49 | ± | 0.15 | vw |
| 6.71 | ± | 0.15 | vw-w |
| 6.39 | ± | 0.15 | w |
| 5.99 | ± | 0.15 | w |
| 5.71 | ± | 0.10 | vw-w |
| 5.59 | ± | 0.10 | w |
| 5.00 | ± | 0.10 | w |
| 4.62 | ± | 0.08 | W |

EP 0 148 038 B1

| | | | |
|---|---|---|---|
| 4.36 | ± | 0.08 | w |
| 4.27 | ± | 0.08 | w |
| 4.00 | ± | 0.08 | w |
| 3.85 | ± | 0.05 | vs |
| 3.73 | ± | 0.05 | s |
| 3.65 | ± | 0.05 | m-s |
| 3.45 | ± | 0.05 | w |
| 3.31 | ± | 0.05 | w |
| 3.055 | ± | 0.05 | w |
| 2.99 | ± | 0.02 | w |
| 2.875 | ± | 0.02 | vw |
| 2.74 | ± | 0.02 | vw |
| 2.61 | ± | 0.02 | vw |
| 2.49 | ± | 0.02 | vw |
| 2.40 | ± | 0.02 | vw |
| 2.012 | ± | 0.02 | w-mw |
| 1.998 | ± | 0.02 | w-mw |
| 1.953 | ± | 0.02 | vw |
| 1.918 | ± | 0.02 | vw |
| 1.766 | ± | 0.02 | vw |
| 1.670 | ± | 0.02 | vw |

18. A process which comprises contacting methanol and/or ethanol with a conversion catalyst consisting of the crystalline ironborosilicate of claim 17, to yield high-octane gasoline.

19. A method which comprises treating a catalyst as claimed in claim 17 with hydrogen diluted with argon or nitrogen or with synthesis gas at elevated temperature to give a synthesis gas conversion catalyst.

20. A process for converting synthesis gas directly to high-octane gasoline which comprises contacting the synthesis gas with the synthesis gas conversion catalyst obtained by the method of claim 17, at a temperature of 250°C to 315°C and a pressure of 446 kPa to 6996.1 kPa.

**Revendications**

27

1. Procédé de synthèse d'un ferroborosilicate cristallin qui contient un tamis moléculaire, fournissant un diagramme de diffraction aux rayons X ayant les lignes de diffraction et les intensités relatives suivantes

| Espacements interplanaires, d (Å) | Intensité relative |
|---|---|
| 11,2 ± 0,2 | w — s |
| 10,05 ± 0,2 | w — ms |
| 9,05 ± 0,15 | vw |
| 7,50 ± 0,15 | w |
| 7,13 ± 0,15 | vw |
| 6,71 ± 0,15 | vw |
| 6,40 ± 0,15 | w |
| 6,04 ± 0,1 | w |
| 5,7 ± 0,1 | w |
| 5,60 ± 0,1 | w |
| 5,13 ± 0,1 | vw |
| 5,00 ± 0,1 | w |
| 4,62 ± 0,08 | w |
| 4,26 ± 0,08 | w |
| 4,02 ± 0,08 | w |
| 3,83 ± 0,05 | vs |
| 3,71 ± 0,05 | s |
| 3,65 ± 0,05 | m — s |
| 3,43 ± 0,05 | w |
| 3,33 ± 0,05 | w |
| 3,26 ± 0,05 | vw |

28

| | | |
|---|---|---|
| 3,05 ± 0,05 | w | |
| 2,99 ± 0,02 | w | |
| 2,86 ± 0,02 | vw | |
| 2,78 ± 0,02 | vw | |
| 2,73 ± 0,02 | vw | |
| 2,61 ± 0,02 | vw | |
| 2,49 ± 0,02 | w | |
| 2,39 ± 0,02 | vw | |
| 2,00 ± 0,02 | w – m | |
| 1,95 ± 0,02 | vw | |
| 1,91 ± 0,02 | vw | |
| 1,87 ± 0,02 | vw | |
| 1,76 ± 0,02 | vw | |
| 1,66 ± 0,02 | vw | |

et ayant la composition suivante exprimée en rapports molaires des oxydes :

$$1,0 \pm 0,3 \; M_{n/2}O : (a \; F_2O_3 : b \; B_2O_3) : y \; SiO_2 \cdot z \; H_2O$$

où M est au moins un cation de valence n, a et b sont chacun supérieur à 0 mais inférieur à 1 de telle sorte que a + b = 1, y est au moins 6 et z est une valeur comprise entre 0 et 500, procédé qui consiste

a) à former un mélange réactionnel comprenant :
(1) les produits de réaction entre un composé contenant du fer et un composé contenant du bore,
(2) un matériau contenant du silicium,
(3) un hydroxyde de métal alcalin ou alcalinoterreux,
(4) un cation alkylammonium ou un de ses précurseurs,
(5) éventuellement un agent de minéralisation, et
(6) de l'eau;
b) et à maintenir ledit mélange réactionnel dans des conditions permettant d'effectuer la formation dudit ferroborosilicate.

2. Procédé selon la revendication 1, dans lequel le composé contenant du bore est un tétrahydroborate alcalin.

3. Procédé selon la revendication 1, dans lequel le composé contenant du bore est l'acide borique.

4. Procédé selon la revendication 1, qui consiste à maintenir ledit mélange réactionnel sous un pH alcalin, à une température de réaction comprise entre 25° C et 300° C et pendant un temps suffisant pour effectuer la cristallisation dudit ferroborosilicate sous la pression spontanée à la température de réaction.

5. Procédé selon la revendication 4, dans lequel la température de réaction est de 90° C à 250° C.

6. Procédé selon la revendication 5, dans lequel la durée de réaction est de 8 heures à 7 jours.

7. Procédé selon la revendication 5, dans lequel ledit mélange réactionnel a une composition, exprimée en rapports molaires des oxydes, comprise dans les intervalles suivants:

$$SiO_2/(B_2O_3 + Fe_2O_3) = 5\text{-}500$$

29

$R_2O/R_2O + M_{n/2}O = 0{,}2\text{-}0{,}97$
$OH\text{-}/SiO_2 = 0{,}01\text{-}11$
$H_2O/OH\text{-} = 10\text{-}4000$

où R est un cation alkylammonium, M est un métal alcalin ou un métal alcalino-terreux et n est la valence de M.

8. Matériau zéolitique de ferroborosilicate cristallin ayant une composition, exprimée en rapports molaires des oxydes, comme suit :

$$1{,}0 \pm 0{,}3\ M_{n/2}O : (a\ F_2O_3 : b\ B_2O_3) : y\ SiO_2 \cdot z\ H_2O$$

où m est au moins un cation de valence n, a est supérieur à 0 mais inférieur à 1, b est supérieur à 0 mais inférieur à 1, de sorte que a + b = 1, y est au moins 6, z est une valeur comprise entre 0 et 500, et fournissant un diagramme de diffraction des rayons X comprenant les lignes de diffraction et les intensités relatives suivantes

| Espacements interplanaires, d (Å) | | | Intensité relative | | |
|---|---|---|---|---|---|
| 11,2 | ± | 0,2 | w | — | s |
| 10,05 | ± | 0,2 | w | — | ms |
| 9,05 | ± | 0,15 | | vw | |
| 7,50 | ± | 0,15 | | w | |
| 7,13 | ± | 0,15 | | vw | |
| 6,71 | ± | 0,15 | | vw | |
| 6,40 | ± | 0,15 | | w | |
| 6,04 | ± | 0,1 | | w | |
| 5,7 | ± | 0,1 | | w | |
| 5,60 | ± | 0,1 | | w | |
| 5,13 | ± | 0,1 | | vw | |
| 5,00 | ± | 0,1 | | w | |
| 4,62 | ± | 0,08 | | w | |
| 4,26 | ± | 0,08 | | w | |
| 4,02 | ± | 0,08 | | w | |
| 3,83 | ± | 0,05 | | vs | |
| 3,71 | ± | 0,05 | | s | |
| 3,65 | ± | 0,05 | m | — | s |
| 3,43 | ± | 0,05 | | w | |
| 3,33 | ± | 0,05 | | w | |
| 3,26 | ± | 0,05 | | vw | |
| 3,05 | ± | 0,05 | | w | |
| 2,99 | ± | 0,02 | | w | |
| 2,86 | ± | 0,02 | | vw | |
| 2,78 | ± | 0,02 | | vw | |
| 2,73 | ± | 0,02 | | vw | |
| 2,61 | ± | 0,02 | | vw | |
| 2,49 | ± | 0,02 | | w | |
| 2,39 | ± | 0,02 | | vw | |
| 2,00 | ± | 0,02 | w | — | m |
| 1,95 | ± | 0,02 | | vw | |
| 1,91 | ± | 0,02 | | vw | |
| 1,87 | ± | 0,02 | | vw | |
| 1,76 | ± | 0,02 | | vw | |
| 1,66 | ± | 0,02 | | vw | |

**9.** Matériau formant un tamis moléculaire de ferroborosilicate cristallin selon la revendication 8, qui, après calcination à une température d'environ 260°C à environ 550°C, fournit un diagramme de diffraction aux rayons X comprenant les lignes de diffraction et les intensités relatives suivantes

| Espacements interplanaires, d (Å) | Intensité relative |
|---|---|
| 11,1 ± 0,2 | w − s |
| 10,04 ± 0,2 | w − ms |
| 7,56 ± 0,15 | vw |
| 6,71 ± 0,15 | vw − w |
| 6,40 ± 0,15 | vw − w |
| 6,00 ± 0,10 | w |
| 5,71 ± 0,1 | vw − w |
| 5,60 ± 0,1 | w |
| 5,01 ± 0,1 | w |
| 4,62 ± 0,08 | w |
| 4,36 ± 0,08 | w |
| 4,27 ± 0,08 | w |
| 4,01 ± 0,08 | w |
| 3,858 ± 0,05 | vs |
| 3,74 ± 0,05 | s |
| 3,648 ± 0,05 | m − s |
| 3,45 ± 0,05 | w |
| 3,32 ± 0,05 | w |
| 3,255 ± 0,05 | vw |
| 3,054 ± 0,05 | w |
| 2,985 ± 0,02 | w |
| 2,867 ± 0,02 | vw |
| 2,734 ± 0,02 | vw |
| 2,490 ± 0,02 | vw |
| 2,396 ± 0,02 | vw |
| 2,010 ± 0,02 | w − mw |
| 1,998 ± 0,02 | w − mw |
| 1,954 ± 0,02 | vw |
| 1,918 ± 0,02 | vw |
| 1,873 ± 0,02 | vw |
| 1,760 ± 0,02 | vw |
| 1,668 ± 0,02 | vw |

**10.** Ferroborosilicate cristallin selon la revendication 8, dans lequel z est compris entre 0 et 50.

**11.** Ferroborosilicate cristallin selon la revendication 8, dans lequel a est égal ou supérieur à 0,05 et b est égal ou supérieur à 0,05, de telle sorte que a + b = 1.

**12.** Ferroborosilicate cristallin selon la revendication 8, dans lequel y est compris entre 6 et 500.

**13.** Ferroborosilicate cristallin selon la revendication 8, dans lequel M comprend un groupement choisi dans le groupe comprenant les cations alkylammonium, les cations hydrogène, les cations métalliques et leurs mélanges.

**14.** Ferroborosilicate cristallin selon la revendication 2, dans lequel y est compris entre 6 et 500, a est égal ou supérieur à 0,05 et b est égal à ou supérieur à 0,05, de sorte que a + b = 1.

**15.** Ferroborosilicate cristallin ayant une composition, exprimée en oxydes, comme suit :

$$1,0 \pm 0,3 \ ( \text{x} \ R_2O \ + \ (1\text{-x})M_{n/2}O) : (a \ Fe_2O_3 \ + \ b \ B_2O_3) : y \ SiO_2 \ \cdot \ z \ H_2O$$

où R est un cation tétrapropylammonium, M est un cation de métal alcalin de valence n, x est supérieur à 0 mais inférieur ou égal à 1, a et b sont supérieurs à 0 mais inférieurs à 1 de sorte que a + b = 1, y est au moins 6 et z est compris entre 0 et 160.

**16.** Ferroborosilicate cristallin formé par calcination du ferroborosilicate cristallin selon la revendication 15, à une température comprise entre 260°C et 550°C, et présentant les lignes de diffraction et les intensités relatives aux rayons X suivantes :

| Espacements interplanaires, d (Å) | | | Intensité relative |
|---|---|---|---|
| 11,1 | ± | 0,2 | w − s |
| 10,04 | ± | 0,2 | w − ms |
| 7,56 | ± | 0,15 | vw |
| 6,71 | ± | 0,15 | vw − w |
| 6,40 | ± | 0,15 | vw − w |
| 6,00 | ± | 0,10 | w |
| 5,71 | ± | 0,1 | vw − w |
| 5,60 | ± | 0,1 | w |
| 5,01 | ± | 0,1 | w |
| 4,62 | ± | 0,08 | w |
| 4,36 | ± | 0,08 | w |
| 4,27 | ± | 0,08 | w |
| 4,01 | ± | 0,08 | w |
| 3,858 | ± | 0,05 | vs |
| 3,74 | ± | 0,05 | s |
| 3,648 | ± | 0,05 | m − s |
| 3,45 | ± | 0,05 | w |
| 3,32 | ± | 0,05 | w |
| 3,255 | ± | 0,05 | vw |
| 3,054 | ± | 0,05 | w |
| 2,985 | ± | 0,02 | w |
| 2,867 | ± | 0,02 | vw |
| 2,734 | ± | 0,02 | vw |
| 2,490 | ± | 0,02 | vw |
| 2,396 | ± | 0,02 | vw |
| 2,010 | ± | 0,02 | w − mw |
| 1,998 | ± | 0,02 | w − mw |
| 1,954 | ± | 0,02 | vw |
| 1,918 | ± | 0,02 | vw |
| 1,873 | ± | 0,02 | vw |
| 1,760 | ± | 0,02 | vw |
| 1,668 | ± | 0,02 | vw |

**17.** Ferroborosilicate cristallin selon la revendication 16, transformé en forme hydrogène par échange des ions ammonium suivi d'une calcination à une température comprise entre 375°C et 550°C et fournissant les lignes de diffraction et les intensités relatives aux rayons X suivantes

34

EP 0 148 038 B1

| Espacements interplanaires, d (Å) | | | Intensité relative |
|---|---|---|---|
| 11,2 | ± | 0,2 | w-s |
| 10,07 | ± | 0,2 | w-ms |
| 7,49 | ± | 0,15 | vw |
| 6,71 | ± | 0,15 | vw-w |
| 6,39 | ± | 0,15 | w |
| 5,99 | ± | 0,15 | w |
| 5,71 | ± | 0,10 | vw-w |
| 5,59 | ± | 0,10 | w |
| 5,00 | ± | 0,10 | w |
| 4,62 | ± | 0,08 | w |
| 4,36 | ± | 0,08 | w |
| 4,27 | ± | 0,08 | w |
| 4,00 | ± | 0,08 | w |
| 3,85 | ± | 0,05 | vs |
| 3,73 | ± | 0,05 | s |
| 3,65 | ± | 0,05 | m-s |
| 3,45 | ± | 0,05 | w |
| 3,31 | ± | 0,05 | w |
| 3,055 | ± | 0,05 | w |
| 2,99 | ± | 0,02 | w |
| 2,875 | ± | 0,02 | vw |
| 2,74 | ± | 0,02 | vw |
| 2,61 | ± | 0,02 | vw |
| 2,49 | ± | 0,02 | vw |
| 2,40 | ± | 0,02 | vw |
| 2,012 | ± | 0,02 | w-mw |
| 1,998 | ± | 0,02 | w-mw |
| 1,953 | ± | 0,02 | vw |
| 1,918 | ± | 0,02 | vw |
| 1,766 | ± | 0,02 | vw |
| 1,670 | ± | 0,02 | vw |

18. Procédé qui consiste à mettre du méthanol et/ou de l'éthanol en contact avec un catalyseur de transformation consistant en le ferroborosilicate cristallin de la revendication 17, pour obtenir de l'essence à degré d'octane élevé.

35

**19.** Procédé qui consiste à traiter un catalyseur selon la revendication 17 avec de l'hydrogène dilué par de l'argon ou de l'azote ou avec du gaz de synthèse à température élevée, pour obtenir un catalyseur de transformation de gaz de synthèse.

**20.** Procédé de transformation de gaz de synthèse directement en essence à degré d'octane élevé, qui consiste à mettre le gaz de synthèse en contact avec le catalyseur de transformation de gaz de synthèse obtenu par le procédé de la revendication 17, à une température de 250 ° C à 315 ° C et à une pression de 446 kPa à 6996,1 kPa.

**Patentansprüche**

**1.** Verfahren zur Synthetisierung von kristallinem Eisenborsilikat, welches ein Molekularsieb-Material umfaßt, das ein Röntgenstrahlenbeugungsbild mit den folgenden Beugungslinien und relativen Stärken hat:

| Ebenenabstände d (Å) | Relative Stärke |
|---|---|
| 11,2 ± 0,2 | w − s |
| 10.05 ± 0,2 | w − ms |
| 9,05 ± 0,15 | vw |
| 7,50 ± 0,15 | w |
| 7,13 ± 0,15 | vw |
| 6,71 ± 0,15 | vw |
| 6,40 ± 0,15 | w |
| 6,04 ± 0,1 | w |
| 5,7 ± 0,1 | w |
| 5,60 ± 0,1 | w |
| 5,13 ± 0,1 | vw |
| 5,00 ± 0,1 | w |
| 4,62 ± 0,08 | w |
| 4,26 ± 0,08 | w |
| 4,02 ± 0,08 | w |
| 3,83 ± 0,05 | vs |
| 3,71 ± 0,05 | s |
| 3,65 ± 0,05 | m − s |
| 3,43 ± 0,05 | w |
| 3,33 ± 0,05 | w |
| 3,26 ± 0,05 | vw |

| | |
|---|---|
| 3,05 ± 0,05 | w |
| 2,99 ± 0,02 | w |
| 2,86 ± 0,02 | vw |
| 2,78 ± 0,02 | vw |
| 2,73 ± 0,02 | vw |
| 2,61 ± 0,02 | vw |
| 2,49 ± 0,02 | w |
| 2,39 ± 0,02 | vw |
| 2,00 ± 0,02 | w − m |
| 1,95 ± 0,02 | vw |
| 1,91 ± 0,02 | vw |
| 1,87 ± 0,02 | vw |
| 1,76 ± 0,02 | vw |
| 1,66 ± 0,02 | vw |

und welches die folgende Zusammensetzung bezüglich der Molverhältnisse der Oxide hat:

$$1,0 \pm 0,3\ M_{n/2}O : (a\ Fe_2O_3 : b\ B_2O_3) : y\ SiO_2 \cdot z\ H_2O$$

worin M mindestens ein Kation der Valenz n ist, a und b jeweils größer als Null aber kleiner als 1 sind, so daß a + b = 1 ist, y mindestens 6 ist und z ein Wert zwischen Null und 500 ist, wobei besagtes Verfahren umfaßt:

    a) Bereitstellen eines Reaktionsgemisches, welches umfaßt:

        (1) Die Reaktionsprodukte zwischen einer eisenhaltigen Verbindung und einer borhaltigen Verbindung,

        (2) ein siliciumhaltiges Material,

        (3) ein Alkali- oder Erdalkalihydroxid,

        (4) ein Alkylammoniumkation oder eine Vorstufe davon,

        (5) wahlweise ein Mineralisierungsmittel, und

        (6) Wasser;

    b) Halten des genannten Reaktionsgemisches unter Bedingungen, um die Bildung des genannten Eisenborsilikats zu bewirken.

**2.** Verfahren nach Anspruch 1, worin die borhaltige Verbindung ein Alkalitetrahydroborat ist.

**3.** Verfahren nach Anspruch 1, worin die borhaltige Verbindung Borsäure ist.

**4.** Verfahren nach Anspruch 1, das das Halten des genannten Reaktionsgemisches, bei alkalischem pH-Wert, bei einer Reaktionstemperatur zwischen 25°C und 300°C, und für eine ausreichende Zeit, um die Kristallisierung des Eisenborsilikats unter autogenem Druck bei der Reaktionstemperatur zu bewirken, umfaßt.

**5.** Verfahren nach Anspruch 4, worin die Reaktionstemperatur 90°C bis 250°C beträgt.

**6.** Verfahren nach Anspruch 5, worin die Reaktionszeit 8 Stunden bis 7 Tagen beträgt.

**7.** Verfahren nach Anspruch 5, worin das genannte Reaktionsgemisch eine Zusammensetzung hat, die hinsichtlich des Molverhältnisses der Oxide in den folgenden Bereich fällt:

$$SiO_2/(B_2O_3 + Fe_2O_3) = 5\text{-}500$$

$R_2O/R_2O + M_{n/2}O = 0{,}2\text{-}0{,}97$
$OH^-/SiO_2 = 0{,}01\text{-}11$
$H_2O/OH^- = 10\text{-}4000$

worin R ein Alkylammoniumkation ist, M ein Alkalimetall oder ein Erdalkalimetall ist und n die Valenz von M ist.

8. Kristallines, zeolithaltiges Eisenborsilikatmaterial, mit der folgenden Zusammensetzung hinsichtlich des Molverhältnisses der Oxide wie folgt:

$1{,}0 \pm 0{,}3\ M_{n/2}O : (a\ Fe_2O_3 : b\ B_2O_3) : y\ SiO_2 \cdot z\ H_2O$

worin M mindestens ein Kation der Valenz n ist, a größer als Null aber kleiner als 1 ist, b größer als Null aber kleiner als 1 ist, so daß a + b = 1 ist, y mindestens 6 ist, z ein Wert zwischen Null und 500 ist, und ein Röngtenstrahlenbeugungsbild, das die folgenden Beugungslinien und zugeordneten Stärken umfaßt, bereitstellt:

| Ebenenabstände, d (Å) | Relative Stärken |
|---|---|
| 11,2 ± 0,2 | w – s |
| 10,05 ± 0,2 | w – ms |
| 9,05 ± 0,15 | vw |
| 7,50 ± 0,15 | w |
| 7,13 ± 0,15 | vw |
| 6,71 ± 0,15 | vw |
| 6,40 ± 0,15 | w |
| 6,04 ± 0,1 | w |
| 5,7 ± 0,1 | w |
| 5,60 ± 0,1 | w |
| 5,13 ± 0,1 | vw |
| 5,00 ± 0,1 | w |
| 4,62 ± 0,08 | w |
| 4,26 ± 0,08 | w |
| 4,02 ± 0,08 | w |
| 3,83 ± 0,05 | vs |
| 3,71 ± 0,05 | s |
| 3,65 ± 0,05 | m – s |
| 3,43 ± 0,05 | w |
| 3,33 ± 0,05 | w |
| 3,26 ± 0,05 | vw |
| 3,05 ± 0,05 | w |
| 2,99 ± 0,02 | w |
| 2,86 ± 0,02 | vw |
| 2,78 ± 0,02 | vw |

| | |
|---|---|
| 2,73 ± 0,02 | vw |
| 2,61 ± 0,02 | vw |
| 2,49 ± 0,02 | w |
| 2,39 ± 0,02 | vw |
| 2,00 ± 0,02 | w-m |
| 1,95 ± 0,02 | vw |
| 1,91 ± 0,02 | vw |
| 1,87 ± 0,02 | vw |
| 1,76 ± 0,02 | vw |
| 1,66 ± 0,02 | vw |

9. Kristallines Eisenborsilikat Molekularsieb-Material nach Anspruch 8, das nach Kalzinierung bei einer Temperatur von ungefähr 260°C bis ungefähr 550°C, ein Röntgenstrahlenbeugebild, das die folgenden Beugelinien und relativen Stärken umfaßt, zur Verfügung stellt:

| Ebenenabstände, d (Å) | | | Relative Stärken |
|---|---|---|---|
| 11,1 | ± | 0,2 | w-s |
| 10,04 | ± | 0,2 | w-ms |
| 7,56 | ± | 0,15 | vw |
| 6,71 | ± | 0,15 | vw-w |
| 6,40 | ± | 0,15 | vw-w |
| 6,00 | ± | 0,10 | w |
| 5,71 | ± | 0,1 | vw-w |
| 5,60 | ± | 0,1 | w |
| 5,01 | ± | 0,1 | w |
| 4,62 | ± | 0,08 | w |
| 4,36 | ± | 0,08 | w |
| 4,27 | ± | 0,08 | w |
| 4,01 | ± | 0,08 | w |
| 3,858 | ± | 0,05 | vs |
| 3,74 | ± | 0,05 | s |
| 3,648 | ± | 0,05 | m-s |
| 3,45 | ± | 0,05 | w |
| 3,32 | ± | 0,05 | w |
| 3,255 | ± | 0,05 | vw |

39

| | | |
|---|---|---|
| 3,054 | ± 0,05 | w |
| 2,985 | ± 0,02 | w |
| 2,867 | ± 0,02 | vw |
| 2,734 | ± 0,02 | vw |
| 2,490 | ± 0,02 | vw |
| 2,396 | ± 0,02 | vw |
| 2,010 | ± 0,02 | w-mw |
| 1,998 | ± 0,02 | w-mw |
| 1,954 | ± 0,02 | vw |
| 1,918 | ± 0,02 | vw |
| 1,873 | ± 0,02 | vw |
| 1,760 | ± 0,02 | vw |
| 1,668 | ± 0,02 | vw |

**10.** Kristallines Eisenborsilikat nach Anspruch 8, worin z zwischen Null und 50 liegt.

**11.** Kristallines Eisenborsilikat nach Anspruch 8, worin a gleich oder größer als 0,05 ist und b gleich oder größer als 0,05 ist, so daß a + b = 1 ist.

**12.** Kristallines Eisenborsilikat nach Anspruch 8, worin y zwischen 6 und 500 liegt.

**13.** Kristallines Eisenborsilikat nach Anspruch 8, worin M ein Element ausgewählt aus der Gruppe, bestehend aus Alkylammoniumkation, Wasserstoffkation, einem Metallkation und Gemischen davon, umfaßt.

**14.** Kristallines Eisenborsilikat nach Anspruch 2, worin y zwischen 6 und 500 liegt, a gleich oder größer als 0,05 ist und b gleich oder größer als 0,05 ist, so daß a + b = 1 ist.

**15.** Kristallines Eisenborsilikat, mit der folgenden Zusammensetzung bezüglich der Oxide:

$1,0 \pm 0,3 \ (x \ R_2O \ + \ (1-x)M_{n/2}O) : (a \ Fe_2O_3 \ + \ b \ B_2O_3) : y \ SiO_2 \ ^{\bullet} \ z \ H_2O$

worin R ein Tetrapropylammoniumkation ist, M ein Alkalimetallkation der Valenz n ist, X größer als Null aber kleiner oder gleich 1 ist, a und b jeweils größer als Null aber kleiner als 1 sind, so daß a + b = 1 ist, y mindestens 6 ist und z zwischen Null und 160 liegt.

**16.** Kristallines Eisenborsilikat, das durch Kalzinierung des kristallinen Eisenborsilikats nach Anspruch 15 bei einer Temperatur von zwischen 260 ° C und 550 ° C gebildet wurde und die folgenden Röntgenstrahlenbeugelinien und die zugehörigen Stärken aufweist:

EP 0 148 038 B1

| Ebenenabstände, d (Å) | Relative Stärken |
|---|---|
| 11,1 ± 0,2 | w-s |
| 10,04 ± 0,2 | w-ms |
| 7,56 ± 0,15 | vw |
| 6,71 ± 0,15 | vw-w |
| 6,40 ± 0,15 | vw-w |
| 6.00 ± 0,10 | w |
| 5,71 ± 0,1 | vw-w |
| 5,60 ± 0,1 | w |
| 5,01 ± 0,1 | w |
| 4,62 ± 0,08 | w |
| 4,36 ± 0,08 | w |
| 4,27 ± 0,08 | w |
| 4,01 ± 0,08 | w |
| 3,858 ± 0,05 | vs |
| 3,74 ± 0,05 | s |
| 3,648 ± 0,05 | m-s |
| 3,45 ± 0,05 | w |
| 3,32 ± 0,05 | w |
| 3,255 ± 0,05 | vw |
| 3,054 ± 0,05 | w |
| 2,985 ± 0,02 | w |
| 2,867 ± 0,02 | vw |
| 2,734 ± 0,02 | vw |
| 2,490 ± 0,02 | vw |
| 2,396 ± 0,02 | vw |
| 2,010 ± 0,02 | w-mw |
| 1,998 ± 0,02 | w-mw |
| 1,954 ± 0,02 | vw |
| 1,918 ± 0,02 | vw |
| 1,873 ± 0,02 | vw |
| 1,760 ± 0,02 | vw |
| 1,668 ± 0,02 | vw |

17. Kristallines Eisenborsilikat nach Anspruch 16, umgesetzt in die Wasserstofform durch Austauschen des Ammoniums mit anschließender Kalzinierung bei einer Temperatur von 375°C bis 550°C, das die folgenden Röntgenstrahlenbeugelinien und die zugehörigen Stärken zur Verfügung stellt:

| Ebenenabstände, d (Å) | Relative Stärken |
|---|---|
| 11,2 ± 0,02 | w-s |
| 10,07 ± 0,2 | w-ms |
| 7,49 ± 0,15 | vw |
| 6,71 ± 0,15 | vw-w |
| 6,39 ± 0,15 | w |
| 5,99 ± 0,15 | w |
| 5,71 ± 0,10 | vw-w |
| 5,59 ± 0,10 | w |
| 5,00 ± 0,10 | w |
| 4,62 ± 0,08 | w |
| 4,36 ± 0,08 | w |
| 4,27 ± 0,08 | w |
| 4,00 ± 0,08 | w |
| 3,85 ± 0,05 | vs |
| 3,73 ± 0,05 | s |
| 3,65 ± 0,05 | m-s |
| 3,45 ± 0,05 | w |
| 3,31 ± 0,05 | w |
| 3,055 ± 0,05 | w |
| 2,99 ± 0,02 | w |
| 2,875 ± 0,02 | vw |
| 2,74 ± 0,02 | vw |
| 2,61 ± 0,02 | vw |
| 2,49 ± 0,02 | vw |
| 2,40 ± 0,02 | vw |
| 2,012 ± 0,02 | w-mw |
| 1,998 ± 0,02 | w-mw |
| 1,953 ± 0,02 | vw |
| 1,918 ± 0,02 | vw |
| 1,766 ± 0,02 | vw |
| 1,670 ± 0,02 | vw |

**18.** Verfahren, das das In-Kontakt-bringen von Methanol und/oder Ethanol mit einem Konvertierungskatalysator umfaßt, der aus dem kristallinen Eisenborsilikat nach Anspruch 17 besteht, um Benzin mit hoher Oktanzahl zu erhalten.

**19.** Verfahren, das die Behandlung eines Katalysators nach Anspruch 17, mit Wasserstoff, verdünnt mit Argon oder Stickstoff oder mit Synthesegas bei erhöhter Temperatur umfaßt, um einen Synthesegaskonvertierungskatalysator zu erhalten.

**20.** Verfahren zur direkten Umwandlung von Sythesegas in Benzin mit hoher Oktanzahl, das das Kontaktieren von Synthesegas mit dem Sythesegaskonvertierungskatalysator, der durch das Verfahren nach Anspruch 17 erhalten wurde, umfaßt, bei einer Temperatur von 250° C bis 315° C und bei einem Druck von 446 kPa bis 6996,1 kpa.